Europäisches Patentamt

European Patent Office

Office européen des brevets

(19)

(11) **EP 0 759 566 A1**

(12) **EUROPÄISCHE PATENTANMELDUNG**

(43) Veröffentlichungstag:
26.02.1997 Patentblatt 1997/09

(51) Int. Cl.⁶: **G02B 5/28**, A01G 9/14

(21) Anmeldenummer: 96112700.8

(22) Anmeldetag: 07.08.1996

(84) Benannte Vertragsstaaten:
DE DK ES FR

(30) Priorität: 22.08.1995 DE 19530797

(71) Anmelder:
• MERCK PATENT GmbH
64293 Darmstadt (DE)
• HYPLAST N.V.
B-2320 Hoogstraten (BE)

(72) Erfinder:
• Friz, Martin, Dr.
64367 Mühltal (DE)
• Reynders, Peter, Dr.
64347 Griesheim (DE)
• Daponte, Tony Leon Filip
2050 Antwerpen (BE)
• Verschaeren, Patrick Corneel Mathilde
2960 Brecht (BE)

(54) **Kompositmaterial zur Abschirmung von Strahlung**

(57) Kompositmaterial zur Abschirmung von Strahlung, umfassend einen transparenten anorganischen oder organischen Träger und ein darauf befindliches transparentes Interferenzschichtsystem, das aus mindestens zwei Schichten von Materialien mit unterschiedlicher Brechzahl besteht, wobei auf eine Schicht mit hoher Brechzahl eine Schicht mit niedriger Brechzahl folgt.

**Beschreibung**

Die Erfindung betrifft ein Kompositmaterial zur Beeinflussung von Reflexion und Transmission des einfallenden Lichtes, das aus einem Träger und einem Interferenzschichtsystem besteht. Es wird bevorzugt in Landwirtschaft und Gartenbau für die Pflanzenanzucht und den Pflanzenanbau eingesetzt. Außerdem kann es in Verbindung mit Beleuchtungseinrichtungen zur Verbesserung des Wachstums der beleuchteten Pflanzen, zum Beispiel in Wintergärten, verwendet werden.

Wachstum und Morphogenese der Pflanze können durch die Einstellung spezieller Lichtverhältnisse beeinflußt werden. Für diese Lichtverhältnisse innerhalb umbauter Räume für den Pflanzenanbau, beispielsweise innerhalb eines Gewächshauses oder bei Verwendung einer Mulchfolie, sind eine Reihe von Faktoren von besonderem Interesse. Diese sind in erster Linie die Temperatur sowie die Intensität und die spektrale Verteilung des einfallenden Lichtes.

In einem Gewächshaus wachsen Pflanzen nicht so gut, wenn die Temperaturunterschiede zwischen Tag und Nacht sehr groß sind, weil sie gegenüber den Temperaturschwankungen eine Resistenz aufbauen. Intensive Sonneneinstrahlung, insbesondere die NIR-Strahlung, sollte deshalb vom umbauten Raum abgeschirmt werden. Dagegen wird angestrebt, daß bei Nacht die Wärme innerhalb des umbauten Raumes gespeichert wird. Um Verbrennungen an Pflanzen zu vermeiden, ist bei zu hoher Intensität eine Streuung des einfallenden Lichtes erforderlich.

Auf die Pflanze sollte nur der Teil aus dem Spektrum des einfallenden Lichtes fallen, der für sie auch verwertbar ist. Es handelt sich hierbei um einen Bereich des Spektrums des sichtbaren Lichtes zwischen 380 und 780 nm, der als photosynthetisch aktive Strahlung (PAR) bezeichnet wird.

Im Falle von Mulchfolien ist der umgekehrte Effekt erwünscht. Die photosynthetisch aktive Strahlung muß reflektiert werden und die anderen Teile des sichtbaren Lichtes sollen durch die Folie hindurchgehen. Mulchfolien werden zur Verbesserung der Wachstumsbedingungen von Nutzpflanzen und zur Unterdrückung des Wachstums von Unkräutern und damit zur Minimierung der Anwendung von chemischen Herbiciden eingesetzt.

Von Seiten der Pflanzenzüchter besteht auch der Wunsch, auf die Pflanzenmorphogenese Einfluß zu nehmen. Unter Morphogenese versteht man den Einfluß von Umweltfaktoren auf die Form und das Aussehen von Pflanzen. Einer dieser Faktoren ist die spektrale Energieverteilung. Es ist bekannt, daß das Verhältnis von Rot zu nahem Infrarot im Spektralbereich von 660 bis 730 nm wichtig für die Blüten- und Früchteentwicklung ist. Durch eine Änderung dieses Verhältnisses kann der gewünschte Einfluß auf die Pflanzenmorphogenese erreicht werden.

Gewächshäuser aus Glas erfüllen bereits einige der oben genannten Bedingungen infolge der inhärenten physikalischen Eigenschaften von anorganischem Glas und spezieller konstruktiver Maßnahmen wie Nörpelglas und Schattierungsgewebe.

Aus DE 25 44 245 ist ein Verglasungsmaterial aus Polymethylmethacrylat für Gebäude und Fahrzeuge bekannt, das ein Interferenzpigment für die Abschirmung von IR-Strahlung einer Wellenlänge von 800 bis 1500 nm enthält. Das verwendete Pigment hat eine rosa-rote Farbe, wodurch das Material im auffallenden Licht rosa-rot und im durchfallenden Licht blau-grün gefärbt ist. Für eine Verwendung in Gewächshäusern hat dieses Verglasungsmaterial den Nachteil, daß Anteile des sichtbaren Lichts hindurchgehen, die von der Pflanze nicht verwertet werden können und andererseits der rote Anteil des sichtbaren Lichtes, der für die Pflanze verwertbar ist, durch das Verglasungsmaterial abgeschirmt wird. Der hindurchgehende grüne Anteil hat außerdem noch den Nachteil, daß er durch Umwandlung in langwelliges Licht mit zur Erwärmung des Gewächshauses beiträgt.

EP-A-0 428 937 beschreibt ein grauweißes Anstrichmittel für Gewächshäuser, das aus einem polymeren Trägermaterial und darin suspendierten, reflektierenden Partikeln besteht. Diese Partikel sind Aluminiumplättchen und/oder mit Titandioxid beschichtete Glimmerplättchen. Das Anstrichmittel wird für temporäre Beschichtungen bei extremen Wetterlagen (Sommer) verwendet. Im Winter kann es durch Abspritzen mit einem Wasserstrahl wieder entfernt werden. Nähere Angaben zum verwendeten Pigment werden nicht gemacht.

Das Anstrichmittel hat den Nachteil, daß durch die Metallpartikel nicht nur die IR-Strahlung, sondern auch ein erheblicher Teil des für die Pflanze verwertbaren sichtbaren Lichtes reflektiert wird. Der grüne Anteil des hindurchgehenden Lichtes ist für die Pflanze nicht verwertbar und trägt zur Aufheizung des Gewächshauses bei.

WO 94/05 727 beschreibt ein Kompositmaterial zur selektiven Abschirmung von Strahlung, bestehend aus einem Polymer, einem Interferenzpigment und den üblichen, für das jeweilige Polymer notwendigen Stabilisatoren und Verarbeitungshilfsmitteln.

In Abhängigkeit von konkreten Anwendungszwecken werden unterschiedliche Interferenzpigmente eingesetzt. So werden für Gewächshausfolien grüne Interferenzpigmente mit einer Hauptreflexionsbande im Bereich zwischen 490 und 580 nm und einer zweiten Reflexionsbande im kurzwelligen Infrarot zwischen 1000 und 3000 nm, für Mulchfolien rot-blaue Interferenzpigmente mit einer Hauptreflexionsbande zwischen 380 und 480 nm und einer zweiten Reflexionsbande zwischen 600 und 800 nm und für Folien zur Beeinflussung der Pflanzenmorphogenese Interferenzpigmente mit einer Hauptreflexionsbande zwischen 700 und 800 nm eingesetzt.

Interferenzpigmente haben den Nachteil, daß die Reflexionsbanden und damit auch die Durchlässigkeitsbereiche sehr breit sind und deshalb das Pflanzenwachstum nicht selektiv genug gesteuert werden kann.

Die Intensität des reflektierten Lichtes ist niedrig, so daß ein großer Teil des unerwünschten Lichtes noch auf die Pflanze fällt.

Neben den Hauptreflexionsbanden existieren noch Nebenreflexionsbanden. Ihre Position im Spektrum des Sonnenlichtes ist festgelegt durch den normalen Dreischichtaufbau der Interferenzpigmente. Die Nebenbanden liegen leider im Bereich der photosynthetisch aktiven Strahlung (PAR), wenn sich die Hauptbande zwischen 700 und 800 nm befindet.

Zusammenfassend muß deshalb festgestellt werden, daß Interferenzpigmente hinsichtlich der spektralen Verteilung des durchgehenden Lichtes nicht vollständig die oben genannten Anforderungen erfüllen.

In der Europäischen Patentanmeldung 94 111 390.4 wurde bereits vorgeschlagen, als Agrarfolien Vielschichtfolien einzusetzen, die durch Coextrusion aus zwei verschiedenen Polymeren mit unterschiedlichen Brechzahlen hergestellt werden. Auf eine Schicht mit niedriger Brechzahl folgt jeweils eine Schicht mit höherer Brechzahl, wobei die Differenz zwischen beiden Brechzahlen mindestens 0,03 betragen muß.

Diese Vielschichtfolien haben normalerweise silberglänzende oder irisierende Farben. Bei Einhalten einer bestimmten Schichtdickentoleranz und in Abhängigkeit von der Anzahl und der Dicke der einzelnen Schichten, ist es möglich, durch Interferenz eine bestimmte Farbe zu erzeugen, was letztlich bedeutet, daß ein definierter Bereich aus dem Spektrum des einfallenden Lichtes von der Folie reflektiert wird und nur Licht mit einer gewünschten spektralen Verteilung auf die Pflanze gelangt.

Die koextrudierten Vielfachschichtfolien haben aber folgende Nachteile:

- Für die Erzielung von Interferenzeffekten sind sehr hohe Schichtzahlen erforderlich, da die Unterschiede der Brechungsindices der verschiedenen Materialien gering sind.

- Geringe Unterschiede der Brechungsindices liefern nur schmale Zonen mit hoher Reflexion, daher Einschränkungen in der optischen Funktion.

- Hohe Anforderungen an die Herstelltechnik, um gleichmäßige Schichtdicken mit ausreichenden Genauigkeiten herzustellen.

- Anpassung des Aufbaus der Vielfachschichtfolien an wechselnde optische Anforderungen nur durch aufwendige Maßnahmen möglich (Änderung der Extrusionsanlage).

Interferenzschichtsysteme zur Beeinflussung von Reflexion und/oder Transmission von optischen Bauteilen aus Glas oder Kunststoff sind bekannt. Sie werden vor allem zur Herstellung von Antireflexschichten, Filtern und Strahlenteilern in großem Umfang eingesetzt. Die Anwendungsgebiete der Interferenzoptik haben sich in den letzten Jahrzehnten durch die Entwicklung neuer Beschichtungsverfahren, durch Verbesserung der Meß- und Anlagentechnik stark vergrößert. Reflexionsmindernde Schichten werden in der Optik am häufigsten angewendet. Sie werden vor allem auf Brillengläser und Linsen aufgebracht.

Interferenzsysteme werden aber auch als hochreflektierende Schichten eingesetzt. Durch alternierendes Beschichten mit hoch- und niedrigbrechenden Materialien können Systeme hergestellt werden, deren Reflexionsvermögen in begrenzten Spektralbereichen nahe 100 % ist. Je nach Schichtaufbau; in der Regel haben die einzelnen Schichten eine optische Dichte von $\lambda/4$ oder einem ganzzahligen Vielfachen davon, dienen solche Schichtsysteme auch dazu, z.B. in besonders schmalen oder auch besonders breiten Spektralbereichen bestimmte optische Eigenschaften zu erzeugen. Hier werden $MgF_2$ oder $SiO_2$ als niedrigbrechendes Material und $ZnS$ oder $TiO_2$ als hochbrechendes Material eingesetzt.

Es wurde nun gefunden, daß nach den aus der Interferenzoptik bekannten Verfahren spezielle Interferenzschichtsysteme auf Träger aufgebracht werden können, die in Landwirtschaft und Gartenbau zur Beeinflussung des Wachstums von Pflanzen einsetzbar sind.

Unter Interferenzschichtsystem ist ein System von mindestens zwei Schichten aus Materialien mit unterschiedlicher Brechzahl zu verstehen, wobei auf eine Schicht mit hoher Brechzahl eine Schicht mit niedriger Brechzahl folgt.

Die Schichtmaterialien müssen folgende Bedingungen erfüllen:

- Man braucht zwei Materialien mit möglichst unterschiedlichen Brechzahlen:

    - hochbrechendes Material mit Index 2-2,4
    - niedrigbrechendes Material mit Index 1,4-1,63,

- der Transmissionsbereich der Schichten muß den Anforderungen entsprechen,

- geringe Absorption im Bereich von 0,4 bis 15 µm,

- mechanische und chemische Stabilität der Schichten muß gewährleistet sein,

- gute Haftung auf Unterlagen aus Glas und Kunststoff,

- Haltbarkeit bei Einwirkung von feuchtwarmer Luft,

- Haltbarkeit bei Einwirkung von Lichteinstrahlung sowie

- Haftbarkeit bei mechanischer Belastung der Unterlage (Folie) beim Einsatz.

Als hochbrechende Materialien werden vorzugsweise ZnS, $TiO_{1-2}$, $Ta_2O_5$ und $ZrO_2$ eingesetzt, wobei Suboxide des Titans ($TiO_x$ mit X-Werten von 1-1,7) bevorzugt werden.

Als niedrigbrechende Materialien werden $MgF_2$, $SiO_2$ und andere Oxide des Siliciums sowie $Al_2O_3$ eingesetzt, wobei Suboxide von Silicium (SiO) bevorzugt verwendet werden.

Die Schichtdicke wird auf Werte zwischen 20 nm und 500 nm, bevorzugt zwischen 60 nm und 300 nm eingestellt.

Die mit einem Vielfachschichtsystem maximal erreichbare Reflexion hängt von der Schichtzahl und den Brechwerten der Schichten und des Trägers ab:

$$R = \left[\frac{1-(n_H/n_L)^{z-1}\, n_H{}^2/n_s}{1-(n_H/n_L)^{z-1}\, n_H{}^2/n_s}\right]2$$

dabei ist $n_H$ der Brechungsindex der hochbrechenden Schicht, $n_L$ Brechungsindex der niedrigbrechenden Schicht, $n_s$ Brechungsindex der Unterlage, z ist die Schichtzahl.

Die Schichtdicke für maximale Reflexion ist jeweils $n \cdot d = lambda/4$ mit der Lichtwellenlänge lambda etwa 550 nm.

In der Feinoptik, z.B. bei der Herstellung von Antireflexschichten, Strahlteilern oder Filtern wird mit Schichtzahlen bis zu 100 oder mehr gearbeitet. Bei der Beschichtung von großflächigen Unterlagen (Folien oder Glasplatten) sind derartig hohe Schichtzahlen mit wirtschaftlichem Aufwand nicht realisierbar. Für diese Anwendungen dürften Schichtzahlen von 3 bis 11, bevorzugt 3 bis 7, realistisch sein.

Die Anzahl der Schichten ist aber auch abhängig vom Verwendungszweck des beschichteten Materials. Für die Verwendung als Mulchmaterial ist eine möglichst hohe Reflexion der photosynthetisch aktiven Strahlung erwünscht. Dadurch ist eine größere Anzahl von Schichten erforderlich.

Für die Verwendung in Gewächshäusern wird ein beschichtetes Material verlangt, das für die photosynthetisch aktive Strahlung durchlässig ist, aber die Wärmestrahlung nicht vollständig reflektiert, weil das Gewächshaus erwärmt werden muß. In diesem Falle ist eine geringere Anzahl von Interferenzschichten erforderlich.

Die einzelnen Schichten werden nach bekannten Verfahren durch Sputtern von Metallen, beispielsweise von Titan oder Silicium oder von Legierungen, wie zum Beispiel Indium-Zinn-Legierungen sowie von Metalloxiden, beispielsweise von Titanoxid, Siliciumoxid oder Indium-Zinn-Oxid oder durch thermisches Verdampfen von Metallen oder Metalloxiden hergestellt.

Besonders vorteilhaft ist die Herstellung der Schichten durch reaktives Verdampfen aus den Suboxiden von Silicium (SiO) und Titan ($TiO_x$ mit X-Werten von 1-1,7). Damit können insbesondere auch in Anlagen zur Folienbedampfung hohe Aufdampfraten erzielt werden.

Der Träger, auf dem sich das Interferenzschichtsystem befindet, kann ein anorganisches oder organisches Material sein, das auf den jeweiligen Anwendungszweck, beispielsweise als Abdeckung für Gewächshäuser oder als Mulchfolie, hinsichtlich der optischen und mechanischen Eigenschaften abgestimmt sein muß.

Als anorganisches Material ist transparentes Glas geeignet.

Als organisches Material sind transparente organische Polymere geeignet, beispielsweise Polyolefine; Co- und Terpolymere, wie zum Beispiel Polyethylen mit höherer (HDPE) und niedrigerer Dichte (LDPE); Vinylestercopolymere wie Ethylen-Vinylacetat-Copolymer (EVA); Fluorpolymere; Co- oder Terpolymere wie Polytetrafluorethylen (PTFE) sowie Polyvinylidenchlorid (PVDC), Polyvinylchlorid (PVC), Polycarbonat (PC), Polymethylacrylat (PMMA), Polypropylen (PP), Polyester (PET) oder Mischungen dieser Polymere. Bevorzugt werden Polypropylen, Polyester und Polyethylen mit höherer Dichte.

Der Träger kann in Form von Folien, Platten, Profilen oder Gewebe vorliegen.

Weiterhin kann der Träger einschichtig oder mehrschichtig sein. Außerdem kann er noch zusätzliche Bestandteile enthalten, wie zum Beispiel Kaolin oder Glimmer, um das einfallende Licht zu streuen.

Kaolin und Glimmer werden auch als Zusatzstoffe für PP oder HDPE verwendet, wenn langwelliges Infrarot abgeschirmt werden muß.

Im folgenden soll das Aufbringen der Interferenzschichten durch Aufdampfen näher beschrieben werden:

Bei den Aufdampfverfahren werden die zu verdampfenden Stoffe im Vakuum erhitzt und verdampft. Die Dämpfe kondensieren auf den kalten Substratflächen zu den gewünschten dünnen Schichten. Die Verdampfung geschieht entweder in Behältern aus Metall (Schiffchen aus Wolfram, Molybdän oder Tantalblech), die durch Stromdurchgang direkt beheizt werden, oder durch Beschuß mit Elektronenstrahlen.

Für die Herstellung der Interferenzschichten auf Glas- oder Kunststoff-Trägern kann eine Aufdampfanlage eingesetzt werden, wie sie auch für die Herstellung von Beschichtungen für die Feinoptik in großem Umfang eingesetzt werden. Die Aufdampfanlage besteht aus den üblichen Komponenten, wie Vakuumkessel, Vakuumpumpsystem, Druckmeß- und Steuereinheiten, Verdampfereinrichtungen, wie Widerstandsverdampfer (Schiffchen) und Elektronenstrahlverdampfer, Schichtdickenmeß- und Kontrollsystemm Halterungen für die zu beschichtenden Substrate, Vorrichtung zur Einstellung bestimmter Druckverhältnisse sowie ein Gaseinlaß- und Regelsystem für Sauerstoff.

Zur Verbesserung der Schichteigenschaften (Haftung, Härte, Dichte und Haltbarkeit) werden oft Zusatzeinrichtungen zur Vorbehandlung der Unterlagen mit einem Plasma (Glimmeinrichtung) bzw. zum ionengestützten Beschichten (Iona Assisted Deposition) eingesetzt.

Die Beschichtung der oben beschriebenen Trägermaterialien erfolgt in herkömmlichen Bandbedampfungsanlagen.

Die Hochvakuumaufdampftechnik ist ausführlich beschrieben in Vakuum-Beschichtung, Bände 1-5; Herausgeber Frey, Kienel u. Löbl, VDI-Verlag 1995.

Das Aufbringen der Schichten durch Sputter-Verfahren erfolgt auf folgende Weise:

Beim Sputterverfahren oder bei der Kathodenzerstäubung wird zwischen den Substraten und dem Beschichtungsmaterial, das in Form von Platten (Target) vorliegt, eine Gasentladung (Plasma) gezündet. Das Beschichtungsmaterial wird durch energiereiche Ionen aus dem Plasma, z.B. Argonionen, beschossen und dadurch abgetragen bzw. zerstäubt. Die Atome oder Moleküle des zerstäubten Beschichtungsmaterials werden auf dem Substrat niedergeschlagen und bilden die gewünschte dünne Schicht.

Für Sputterverfahren eignen sich besonders Metalle oder Legierungen. Diese können mit vergleichsweise hohen Geschwindigkeiten, insbesondere im sogenannten DC-Magnetron-Verfahren, zerstäubt werden. Verbindungen wie Oxide oder Suboxide oder Mischungen aus Oxiden können durch Einsatz des Hochfrequenz-Sputtern ebenfalls zerstäubt werden. Die chemische Zusammensetzung der Schichten wird durch die Zusammensetzung des Beschichtungsmaterials (Target) bestimmt. Sie kann aber auch durch Zusätze zum Gas, das das Plasma bildet, beeinflußt werden. Insbesondere werden Oxid- oder Nitritschichten durch Zusatz von Sauerstoff oder Stickstoff im Gasraum hergestellt.

Die Struktur der Schichten kann durch geeignete Maßnahmen, wie Beschuß der aufwachsenden Schicht durch Ionen aus dem Plasma, beeinflußt werden.

Das Sputterverfahren kann sowohl für die Beschichtung von Einzelteilen wie auch von Folien oder von plattenförmigen Substraten eingesetzt werden.

Das Sputterverfahren ist ebenfalls beschrieben in Vakuum-Beschichtung, Bände 1-5; Herausgeber Frey, Kienel und Löbl, VDI-Verlag 1995.

Für den Einsatz für Gewächshausfolien müssen die Interferenzschichtsysteme folgende Anforderungen erfüllen:

Für Anwendungen in nord- und mitteleuropäischen Ländern mit eher kühlen Klimata und geringer Sonnenintensität werden Schichtsysteme mit folgenden Eigenschaften benötigt:

- Hohe Transmission im sichtbaren Spektralgebiet (VIS) von ca. 400 bis 700 nm (PAR-Sepktrum),
- hohe Transmission im nahen Infrarot (NIR) von 700 bis 1200 nm sowie
- hohe Reflexion im Infrarot (IR) von 5-15 μm.

Durch derartige Schichtsysteme wird das einfallende Sonnenlicht zum Wachstum der Pflanzen (PAR-Spektrum) und zur Erwärmung des Gewächshauses (NIR-Strahlung) optimal ausgenutzt. Wärmeverluste durch Abstrahlung, insbesondere in der Nacht, werden durch die Reflexion der Beschichtung im IR verhindert.

Bei stärkerer Sonneneinstrahlung, z.B. im Sommer oder in südeuropäischen Ländern, kann eine Überhitzung des Inneren des Gewächshauses durch folgende Charakteristik der Interferenzschicht erreicht werden:

- hohe Transmission für PAR-Spektrum im VIS,
- hohe Reflexion im NIR sowie
- geringe Reflexion im IR.

Dadurch gelangt das für die Photosynthese erforderliche Licht in das Gewächshaus und auf die Pflanzen. Die Wärmestrahlung der Sonne im NIR wird reflektiert; eine Überhitzung des Gewächshauses durch Abstrahlung im Infrarot wird verhindert.

An Interferenzschichten für Mulchfolien werden folgende Anforderungen gestellt:

- hohe Reflexion für PAR-Spektrum im VIS,
- hohe Transmission im NIR sowie
- hohe Reflexion im IR.

Die hohe Reflexion für das PAR-Spektrum bewirkt intensive Bestrahlung der Nutzpflanzen mit dem für die Photosynthese erforderlichem Licht. Gleichzeitig wird Wachstum von Unkraut unter der Folie verhindert. Die hohe Transmission im NIR bewirkt eine rasche Erwärmung des Bodens unter der Mulchfolie. Die hohe Reflexion im IR verhindert die Abstrahlung von langwelliger Wärmestrahlung vom Boden und damit die Abkühlung des Bodens während der Nacht.

An Interferenzschichtsysteme zur Beeinflussung der Morphogenese der Pflanzen werden folgende Anforderungen gestellt:

- hohe Transmission im PAR (400 bis 700 nm),
- hohe Reflexion im NIR (700 bis 1300 nm),
- hohe Transmission im Blau (400-500 nm) sowie
- hohe Reflexion im Rot (600 bis 700 nm).

Durch Anpassung der Transmission oder Reflexion der Schicht kann der Teil des Lichts, der eine bestimmte, gewünschte Wachstumsform begünstigt, bevorzugt auf die Nutzpflanzen gelenkt werden.

Das erfindungsgemäße Kompositmaterial kann in vielfältiger Weise in Form von Folien, Platten, Profilen oder Gewerbe in Landwirtschaft und Gartenbau verwendet werden. Mit dem Kompositmaterial ist ein unmittelbarer Einfluß auf das Wachstum von Blumen und Gemüse, hinsichtlich Zeitpunkt der Blüte, Zeitpunkt der Ernte, Qualität und Menge der Früchte möglich.

Die nachfolgenden Beispiele sollen die Erfindung erläutern, ohne sie zu begrenzen.

Beispiel 1

Ein Kompositmaterial, das als Gewächshausfolie besonders geeignet ist, besteht aus 6 abwechselnden Schichten aus Siliciumdioxid und Titandioxid auf einer Folie als Träger. Die Folie besteht aus Polypropylen Homopolymer, stabilisiert mit 0,6 Gew.-% HALS (Hostavin N 30). Die Folie hat eine Dicke von 40 bis 50 μm.

Das Interferenzschichtsystem besitzt folgenden Aufbau:

| Schicht-Nr. | Brechzahl | geometr. Dicke nm | optische Dicke nm |
|---|---|---|---|
| 1 | 1,46 | 68,5 | 100 |
| 2 | 2,2 | 90,9 | 200 |
| 3 | 1,46 | 136,9 | 200 |
| 4 | 2,2 | 90,9 | 200 |
| 5 | 1,46 | 136,9 | 200 |
| 6 | 2,2 | 90,9 | 200 |

Die Brechzahl des Trägers beträgt 1,5.

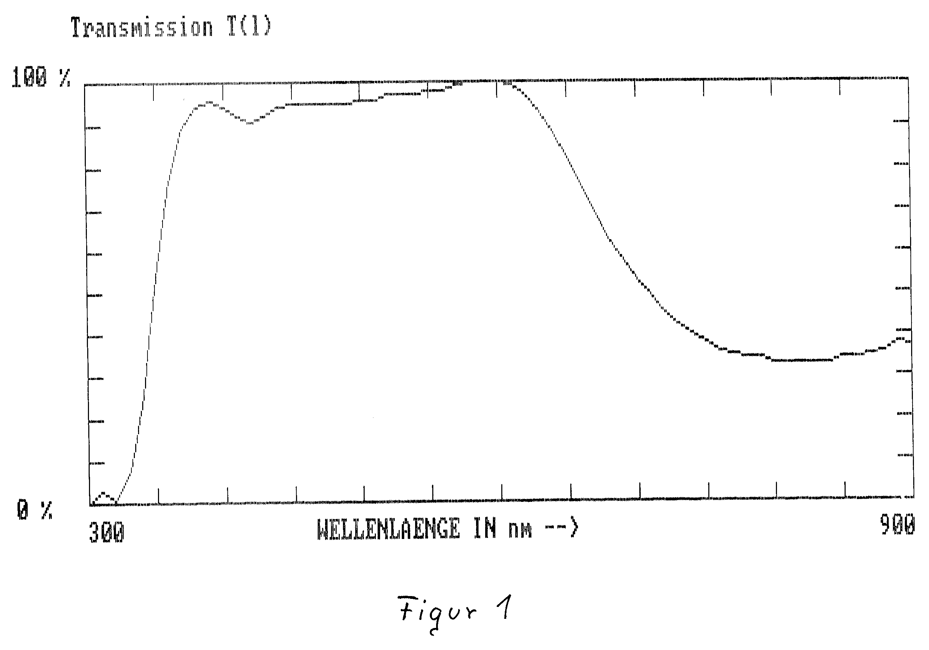

In Figur 1 ist die Transmission der Folie in Abhängigkeit von der Wellenlänge dargestellt.

Wertetabelle der Transmissionsmessungen

| Nr. | Wellenlänge nm | Transmission % | Nr. | Wellenlänge nm | Transmission % |
|---|---|---|---|---|---|
| 1 | 900 | 36,9 | 2 | 890 | 37,5 |
| 3 | 880 | 36,2 | 4 | 870 | 35,2 |
| 5 | 860 | 34,4 | 6 | 850 | 33,8 |
| 7 | 840 | 33,3 | 8 | 830 | 33 |
| 9 | 820 | 32,8 | 10 | 810 | 32,8 |
| 11 | 800 | 33 | 12 | 790 | 33,5 |
| 13 | 780 | 34,1 | 14 | 770 | 35 |
| 15 | 760 | 36,3 | 16 | 750 | 37,8 |
| 17 | 740 | 39,8 | 18 | 730 | 42,2 |
| 19 | 720 | 45,2 | 20 | 710 | 48,7 |
| 21 | 700 | 52,8 | 22 | 690 | 57,6 |
| 23 | 680 | 63,2 | 24 | 670 | 69,3 |
| 25 | 660 | 75,7 | 26 | 650 | 82,1 |
| 27 | 640 | 88,3 | 28 | 630 | 93,3 |
| 29 | 620 | 97,1 | 30 | 610 | 99,4 |
| 31 | 600 | 100,4 | 32 | 590 | 100,3 |
| 33 | 580 | 99,7 | 34 | 570 | 98,9 |
| 35 | 560 | 98,1 | 36 | 550 | 97,6 |
| 37 | 540 | 97,3 | 38 | 530 | 97 |
| 39 | 520 | 96,7 | 40 | 510 | 96,2 |
| 41 | 500 | 95,6 | 42 | 490 | 95,1 |
| 43 | 480 | 94,9 | 44 | 470 | 95 |
| 45 | 460 | 95,3 | 46 | 450 | 95,1 |
| 47 | 440 | 94,1 | 48 | 430 | 92,4 |
| 49 | 420 | 91,1 | 50 | 410 | 91,5 |
| 51 | 400 | 93,8 | 52 | 390 | 95,7 |
| 53 | 380 | 94,1 | 54 | 370 | 88,6 |
| 55 | 360 | 77,1 | 56 | 350 | 53,6 |
| 57 | 340 | 26,3 | 58 | 330 | 7,8 |
| 59 | 320 | 1,4 | 60 | 310 | 3 |
| 61 | 300 | 0 | 62 | 0 | 0 |

Die Transmission der Folie wird mit einem handelsüblichen Spektralphotometer gemessen. Vergleichsmedium ist Luft.

Die Gewächshausfolie besitzt eine hohe Transmission und geringe Reflexion im Sichtbaren im Bereich von 400 bis 700 nm und eine geringe Transmission und hohe Reflexion im nahen Infraroten im Bereich von 700 bis 1300 nm.

Die Herstellung des Interferenzschichtsystems auf der Folie erfolgt nach folgendem Verfahren:

Ein Stück der zu beschichtenden Folie wird auf der Substrathaltevorrichtung in der Aufdampfanlage befestigt, weiterhin ein Glassubstrat zur optischen Vermessung der Aufdampfschicht. Die Aufdampfmaterialien, z.B. Titanoxid S und Siliciumdioxid, werden in die Verdampfertiegel der Elektronenstrahl-Verdampfereinrichtung gegeben. Dann wird die Anlage geschlossen und evakuiert, bis ein Druck von etwa $2 \times 10^{-5}$ mbar erreicht ist. Danach wird die Folie zur Verbesserung der Schichthaftung einer Glimmentladung ausgesetzt, wie in der Beschichtung von Linsen für optische Anwendungen üblich. Anschließend kann die Folie auf einer Temperatur von etwa 80 °C aufgeheizt werden, was ebenfalls vorteilhaft für die Schichtqualität ist. Dann wird in der Anlage ein Sauerstoffdruck von etwa $2 \times 10^{-4}$ mbar eingestellt (Druckregelung oder Flußregelung).

Die erste Schicht wird aus Titanoxid hergestellt. Dazu wird Titanoxid in der Verdampfereinrichtung langsam unter einer Blende auf die Verdampfungstemperatur aufgeheizt, dann wird die Blende geöffnet und die Verdampfung mit einer vorgegebenen Schichtwachstumsgeschwindigkeit, z.B. von 0,2-0,4 nm/sec, bis zur gewünschten Schichtdicke durchgeführt. Nach Erreichen der Schichtdicke wird die Verdampfung beendet durch Abdecken der Verdampferquelle mit der Blende und Abschalten der Verdampferleistung.

Die zweite Schicht wird aus Siliciumoxid hergestellt. Dazu wird analog Siliciumoxid in der Verdampfereinrichtung langsam unter einer Blende auf die Verdampfungstemperatur aufgeheizt, dann wird die Blende geöffnet und die Verdampfung mit einer vorgegebenen Schichtwachstumsgeschwindigkeit, z.B., von 0,2-0,4 nm/sec, bis zur gewünschten Schichtdicke durchgeführt. Nach Erreichen der Schichtdicke wird die Verdampfung beendet durch Abdecken der Verdampferquelle mit der Blende und Abschalten der Verdampferleistung.

Die weiteren Schichten werden analog hergestellt. Nach Beendigung der letzten Schicht wird die Gaszufuhr und die Substratheizung abgestellt. Nach Abkühlen der Anlage auf Raumtemperatur wird die Anlage belüftet und die beschichtete Folie kann entnommen werden.

Die Beschichtung wird in einer Hochvakuum-Aufdampfanlage durchgeführt. Geeignet ist z.B. die Aufdampfanlage A 700 Q der Firma Leybold AG.

Beispiel 2

Ein Kompositmaterial, daß als Mulchfolie besonders geeignet ist, besteht aus 5 abwechselnden Schichten aus Titandioxid und Siliciumdioxid auf einer Folie, wie sie in Beispiel 1 beschrieben ist.

Das Interferenzschichtsystem besitzt folgenden Aufbau:

| Schicht-Nr. | Brechzahl | geometr. Dicke nm | optische Dicke nm |
|---|---|---|---|
| 1 | 2,1 | 66,7 | 140 |
| 2 | 1,46 | 95,9 | 140 |
| 3 | 2,1 | 66,7 | 140 |
| 4 | 1,46 | 95,9 | 140 |
| 5 | 2,1 | 66,7 | 140 |

Die Brechzahl des Trägers beträgt 1,52.

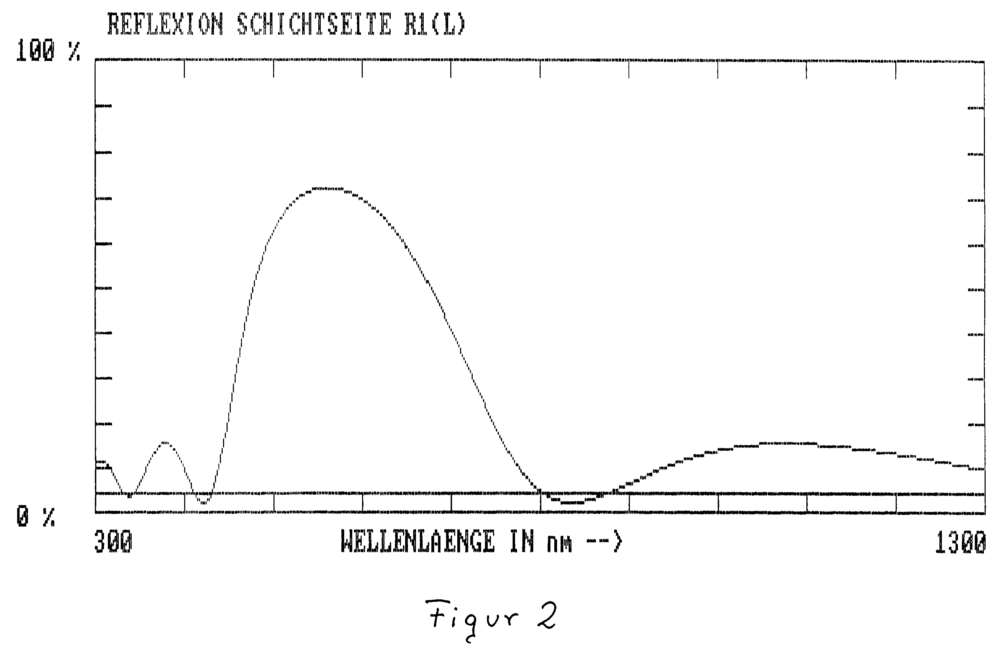

In Figur 2 ist die Reflexion der Folie in Abhängigkeit von der Wellenlänge dargestellt.

Die Mulchfolie besitzt eine hohe Reflexion und geringe Transmission im Sichtbaren im Bereich von 400 bis 700 nm und eine geringe Reflexion und hohe Transmission im nahen Infraroten im Bereich von 700 bis 1300 nm, wodurch der Einfall von sichtbarem Licht auf den Boden und damit das Wachstum von Unkräutern verhindert wird. Gleichzeitig wird der Boden unter der Mulchfolie durch die hindurchtretende Wärmestrahlung erwärmt. Das von der Folie reflektierte sichtbare Licht kann von der Pflanze verwendet werden.

Die Herstellung des Kompositmaterials erfolgt gemäß Beispiel 1.

Beispiel 3

Ein Kompositmaterial, das für die Beeinflussung der Pflanzenmorphogenese besonders geeignet ist, besteht aus 7 abwechselnden Schichten aus Titandioxid und Silciumdioxid auf einer Folie, die in Beispiel 1 näher beschrieben ist.

Das Interferenzschichtsystem besitzt folgenden Aufbau:

| Schicht-Nr. | Brechzahl | geometr. Dicke nm | optische Dicke nm |
|---|---|---|---|
| 1 | 2,1 | 101,0 | 212 |
| 2 | 1,46 | 145,2 | 212 |
| 3 | 2,1 | 101,0 | 212 |
| 4 | 1,46 | 145,2 | 212 |
| 5 | 2,1 | 101,0 | 212 |

Die Brechzahl des Trägers beträgt 1,52.

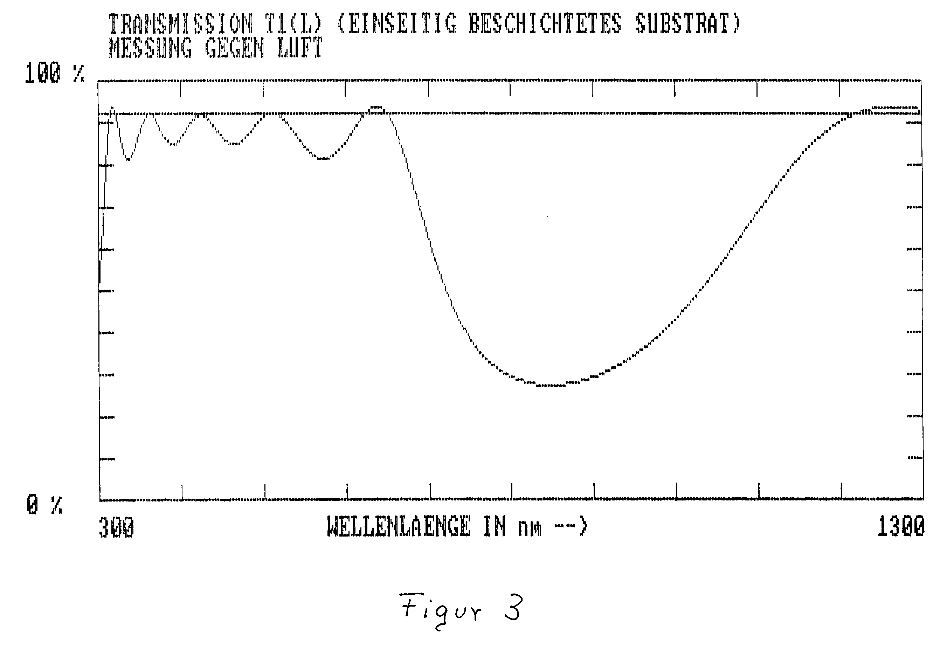

In Figur 3 ist die Transmission der Folie in Abhängigkeit von der Längenwelle dargestellt.

Die Folie für die Beeinflussung der Morphogenese besitzt eine hohe Transmission im PAR (400 bis 700 nm), eine niedrige Transmission im NIR (700 bis 1300 nm), eine hohe Transmission im Blau (400-500 nm) sowie eine geringere Transmission im Rot (600 bis 700 nm).

Die Herstellung des Kompositmaterials erfolgt gemäß Beispiel 1.

**Patentansprüche**

1. Kompositmaterial zur Abschirmung von Strahlung umfassend einen transparenten Träger und ein darauf befindliches transparentes Interferenzschichtsystem.

2. Kompositmaterial nach Anspruch 1, dadurch gekennzeichnet, daß der Träger ein anorganisches oder organisches Material ist.

3. Kompositmaterial nach mindestens einem der Ansprüche 1 und 2, dadurch gekennzeichnet, daß das anorganische Material Glas ist.

4. Kompositmaterial nach mindestens einem der Ansprüche 1 bis 3, dadurch gekennzeichnet, daß das organische Material ein organisches Polymer ist.

5. Kompositmaterial nach mindestens einem der Ansprüche 1 bis 4, dadurch gekennzeichnet, daß das organische Material Polypropylen, Polyester oder Polyethylen mit höherer Dichte ist.

6. Kompositmaterial nach mindestens einem der Ansprüche 1 bis 5, dadurch gekennzeichnet, daß das Interferenzschichtsystem ein System mit mindestens zwei Schichten aus Materialien und unterschiedlicher Brechzahl ist, wobei auf eine Schicht mit hoher Brechzahl eine Schicht mit niedriger Brechzahl folgt.

7. Kompositmaterial nach mindestens einem der Ansprüche 1 bis 6, dadurch gekennzeichnet, daß das Material mit hoher Brechzahl ZnS, $Ta_2O_5$, $ZrO_2$, $TiO_2$ oder ein Suboxid des Titans ($TiO_x$ mit X-Werten von 1-1,7) ist.

8. Kompositmaterial nach mindestens einem der Ansprüche 1 bis 7, dadurch gekennzeichnet, daß das Material mit niedriger Brechzahl $MgF_2$, $Al_2O_3$, $SiO_2$ oder ein Suboxid des Siliciums ist.

Figur 1

Transmission T(1)

100 %

0 %

WELLENLAENGE IN nm --->

300                                             900

EP 0 759 566 A1

REFLEXION SCHICHTSEITE R1(L)

Figur 2

TRANSMISSION T1(L) (EINSEITIG BESCHICHTETES SUBSTRAT)
MESSUNG GEGEN LUFT

WELLENLAENGE IN nm -->

EP 0 759 566 A1

Figur 3

Europäisches
Patentamt

**EUROPÄISCHER RECHERCHENBERICHT**

Nummer der Anmeldung

EP 96 11 2700

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP-A-0 314 413 (TOSHIBA)<br>* Spalte 2, Zeile 15 - Spalte 3, Zeile 43; Abbildungen 1,2 *<br>--- | 1-3,6 | G02B5/28<br>A01G9/14 |
| X | US-A-5 360 659 (ARENDS)<br>* Spalte 5, Zeile 35 - Spalte 9, Zeile 35; Abbildungen 1,2 *<br>--- | 1-4,6 | |
| X | DE-A-23 30 898 (SIEMENS)<br>* Seite 2, letzter Absatz - Seite 6, letzter Absatz; Abbildungen 1-3 *<br>--- | 1-3,6-8 | |
| A,D | WO-A-94 05727 (HYPLAST)<br>* das ganze Dokument *<br>----- | 1-8 | |
| | | | **RECHERCHIERTE SACHGEBIETE (Int.Cl.6)**<br><br>G02B<br>A01G |

Der vorliegende Recherchenbericht wurde für alle Patentansprüche erstellt

| Recherchenort | Abschlußdatum der Recherche | Prüfer |
|---|---|---|
| DEN HAAG | 8.November 1996 | Herygers, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P04C03)